(19) Europäisches Patentamt / European Patent Office / Office européen des brevets

(11) **EP 1 864 246 B1**

(12) **EUROPEAN PATENT SPECIFICATION**

(45) Date of publication and mention
of the grant of the patent:
**09.12.2009 Bulletin 2009/50**

(51) Int Cl.:
*G06K 9/66* (2006.01)     *G06K 9/00* (2006.01)

(21) Application number: **06710110.5**

(22) Date of filing: **16.03.2006**

(86) International application number:
**PCT/GB2006/000948**

(87) International publication number:
**WO 2006/097734 (21.09.2006 Gazette 2006/38)**

(54) **SPATIO-TEMPORAL SELF ORGANISING MAP**

RÄUMLICH-ZEITLICHE SELBSTORGANISIERENDE KARTE

CARTE TOPOLOGIQUE SPATIO-TEMPORELLE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **16.03.2005 GB 0505396**

(43) Date of publication of application:
**12.12.2007 Bulletin 2007/50**

(73) Proprietor: **Imperial Innovations Limited
London SW7 2AZ (GB)**

(72) Inventors:
  • **YANG, Guang-Zhong
    Epsom,Surrey KT19 7ND (GB)**
  • **LO, Benny, Ping, Lai
    London NW8 0HQ (GB)**
  • **THIEMJARUS, Surapa
    Bangkok 10600 (TH)**

(74) Representative: **Korenberg, Alexander Tal
Kilburn & Strode LLP
20 Red Lion Street
London WC1R 4PJ (GB)**

(56) References cited:
  • THIEMJARUS S ET AL.: "Feature Selection for Wireless Sensor Networks" PROC. INT. WORKSHOP ON WEARABLE AND IMPLANTABLE BODY SENSOR NETWORKS, April 2004 (2004-04), pages 1-2, XP002382296
  • VAN LAERHOVEN K ET AL: "Spine versus porcupine: a study in distributed wearable activity recognition" PROCEEDINGS. EIGHTH INTERNATIONAL SYMPOSIUM ON WEARABLE COMPUTERS IEEE COMPUT. SOC LOS ALAMITOS, CA, USA, 2004, pages 142-149, XP002382297 ISBN: 0-7695-2186-X
  • EULIANO N R ET AL: "Spatio-temporal self-organizing feature maps" ICNN 96. THE 1996 IEEE INTERNATIONAL CONFERENCE ON NEURAL NETWORKS (CAT. NO.96CH35907) IEEE NEW YORK, NY, USA, vol. 4, 1996, pages 1900-1905 vol., XP002382298 ISBN: 0-7803-3210-5
  • WEIJIAN WAN ET AL: "Multisource Data Fusion with Multiple Self-Organizing Maps" IEEE TRANSACTIONS ON GEOSCIENCE AND REMOTE SENSING, vol. 37, no. 3, May 1999 (1999-05), XP011021312
  • KARAMEH F N ET AL: "Automated classification of EEG signals in brain tumor diagnostics" AMERICAN CONTROL CONFERENCE, 2000. PROCEEDINGS OF THE 2000 JUNE 28-30, 2000, PISCATAWAY, NJ, USA,IEEE, vol. 6, 28 June 2000 (2000-06-28), pages 4169-4173, XP010516537 ISBN: 0-7803-5519-9

**Description**

This invention relates to data analysis using self organising maps, in particular for the analysis of spatio-temporal data, for example in a body sensor network.

Self organising maps are a well known tool in neutral networks for the visualisation of high dimensional input spaces providing a non linear projection of an input space to an output space, often arranged as a two dimensional array of output units. The training and application of self organising maps is well known.

In essence, a self organising map associates a region of the input space with a particular output unit or group of output units. In order to use a self organising map for classification, each output unit can be labelled with a corresponding class label such that the activation of an output unit indicates that the input to the self organising map belongs to a class associated with the output unit.

A body sensor network, that is a network of sensors distributed across a subject's body, can be used in a number of applications, for example in healthcare, where the activity of the subject has to be monitored. Such body sensor networks are a particular example of an application where the classification of both static and dynamic data must be handled. Static data may result from postures such as sitting, standing or lying down and dynamic data may result from activities such as walking, running or cycling. The use of a body sensor network, which can be worn on the subject's body, for alerting a care giver to, for example, a change in activity of the patient is one example where the classification of both static and dynamic data as belonging to one of a given set of classes is required.

Because self organising maps do not naturally capture temporal information, a particular problem arises if the input space has not only a spatial but also a temporal structure, that is an input signal belonging to a particular class is not constant but varies over time. As a result, if a temporally fluctuating signal is presented to the input of the self organised map, the output will simply fluctuate in accordance with the fluctuation of the input without providing any useful processing of the temporal structure.

Thiemjarus et al, Proc. Int. Workshop on Wearable and Implantable Body Sensor Networks, 2004, 1-2, discloses recognition of patient activities( including postures) with the use of a selforganising map from body-worn acceleration sensors. Laerhoven and Gellerson, Proceedings Eigth International Symposium On Wearable Computers IEEE Coput. Soc, 2004, 142-149, discloses the recognition of a person's motion and pose using sensor types that can easily be worn by a person.

The invention is set out in the independent claims 1, 11, and 15. Further, optional features are described in the dependent claims.

A spatio-temporal self organising map is provided by automatically switching between a static map for a static input signal and a dynamic map for a dynamic input signal. The dynamic map uses a representation of the temporal variation of the input such that a wider range of data can be classified. The automatic switching between maps can be based on one or more of a plurality of measures of the temporal variation of the input, as discussed in relation to the specific embodiments below.

The invention is now described with reference to a number of specific embodiments by way of example only and with reference to the accompanying drawings in which:

Figure 1 is a block diagram of a specific embodiment;
Figure 2 is a flow diagram of a method of training a spatio-temporal self organising map according to the specific embodiment;
Figure 3 is a flow diagram of a method of applying a spatio-temporal self organising map;
Figures 4.and 5 are block diagrams of alternative embodiments; and
Figure 6 is a schematic representation of the positioning of a plurality of sensors on a human subject.

In overview, the embodiments to be described build on the idea of self organising maps for use in classification to provide a method of classifying both dynamic and static data. One example of such data is the data derived from acceleration sensors on a human subject. An activity like walking or jumping will result in a dynamic signal from at least some of the acceleration sensors, while different postures such as standing or sitting will result in a static signal representative of the orientation of the various sensors with respect to gravity (a stationary sensor produces a substantially constant magnitude and direction signal measuring acceleration due to gravity, apart of course from sensor noise).

Classification of both types of data is achieved by separately training a static and a dynamic map, defining a decision variable and switching between the static and the dynamic map based on a threshold for the decision variable. This is a two stage process of inference, where the data is first classified as being either dynamic or static with the appropriate self organising map being used subsequently to classify the correct posture or activity. The main difference between the static and dynamic map is the respective input representation - the static map uses a raw or conditioned data vector (for example using low pass filtering), whereas the dynamic map uses a measure of the temporal variation of each sensor signal as an input.

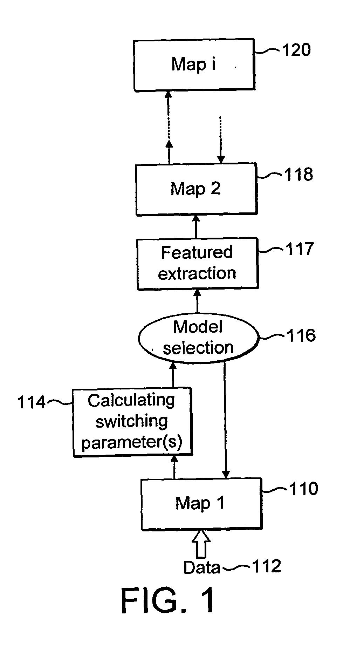

With reference to Figure 1, in a specific embodiment a first, static map 110 produces an output in response to input data 112. The output of the map 110 in response to the input data 112 is received by means 114 for calculating a switching parameter which is used by model selection means 116 to allocate a given record of input data to either the first map 110 or a second, dynamic map 118 with corresponding feature extraction 117. This model selection architecture can be replicated for several layers such that a plurality of maps with corresponding features extraction up to a final map 120 are used.

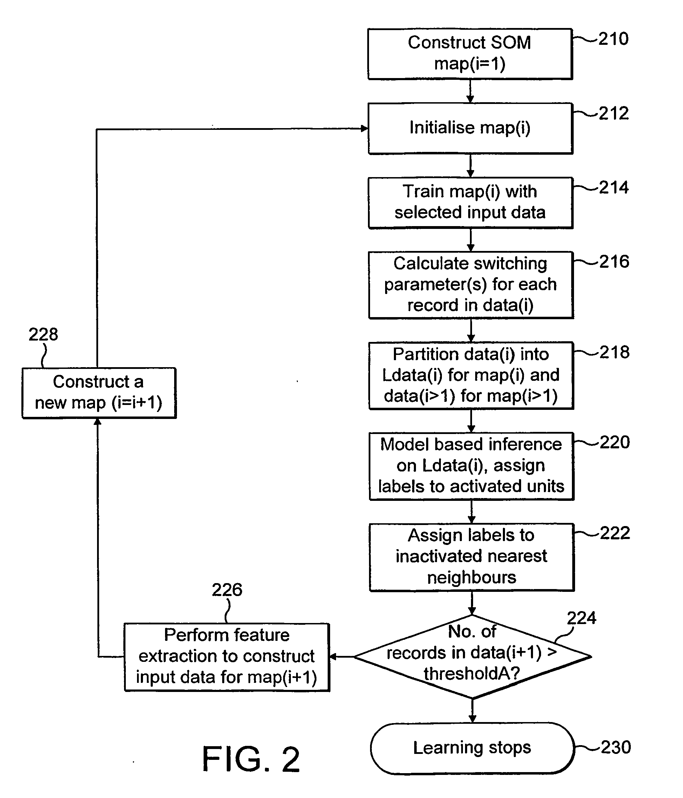

A method of training a spatio-temporal self organising map according to the specific embodiment is now discussed with reference to Figure 2. In preparation for training, a data set comprising a number of data records are obtained. Each record is recorded for a trial of a given posture or activity and is labelled with its corresponding class label. A data record comprises a time series of data samples and may be subdivided into one or more time windows, each comprising a plurality of samples. Each data sample comprises a data vector of a plurality of features or values, each feature being derived from the sensor channels of a sensor or channels of a plurality of sensors at the time the sample is recorded.

At step 210, a first, static, map (i = 1) is constructed for static data and initialised at step 212. At step 214, the map is trained using appropriately selected data. Since the first, static map serves both to classify the static data and also to provide the selection parameter (see below), it may not be enough that the static map is trained only with static, e.g. data from postures. Instead, the set of training data for the first map should, in addition to static data, include data from or body configurations which occur during dynamic activity. Thus, the training data for the static map should be evenly sampled throughout the entire input space of both static and dynamic data. However, in practice, fairly sparse sampling of the input space may be sufficient as long as the entire input space is covered. For example, as long as the entire input data space is covered, a randomly sampled subset of data samples sampled uniformly from all data records may be sufficient.

The training of the map itself can be done using any conventional training algorithm for a self organising map, for example using the following algorithm expressed in pseudo code:

1. Initialise the weight vector $\mathbf{w}_j$, learning rate and the "effective width" $\sigma(t)$ of the neighbourhood function $h_{j,i}(x)(t)$.

2. For each input vector, $\mathbf{x}(t)$ ($t$ is the time step index):

a. Determine the winning output unit, $i(t)$,

$$i(\mathbf{x}) = \underset{j}{\arg\min}\left\|\mathbf{x} - \mathbf{w}_j\right\|, \qquad j = 1, 2, \ldots, l$$

b. Calculate the neighbourhood function,

$$h_{j,i(\mathbf{x})}(t) = \exp\left(\frac{d_{j,i}^2}{2\sigma^2(t)}\right)$$

where $d_{j,i}$ is the distance between weight vectors of output unit $i$ and $j$.

c. Update the weight vectors of the winning output unit and its neighbours,

$$\mathbf{w}_j(t+1) = \mathbf{w}_j(t) + \eta(t)h_{i,j(\mathbf{x})}(t)(\mathbf{x} - \mathbf{w}_j(t))$$

d. Reduce the "effective width" $\sigma(t)$ (ordering phrase) and the learning rate $\eta(t)$

3. Repeat step 2 until the convergence condition is satisfied; reuse the input data if necessary.

Once the training of the static map has converged, the output of the static map is used to calculate a switching parameter for each record in the data set. To this end, the samples of each data record are applied to the map and its output is recorded. The switching parameter must be a measure of the temporal variability of the input from each record. In the specific embodiment, a measure of the temporal variability of the output of the map, that is the activation of the winning output unit for each sample, is used as a measure of the temporal availability of the input.

A number of measures of the temporal availability of the output of the map can be calculated based on the probability distribution over activated output units **(p)** or the transitional distance between output units activated at subsequent time steps **(d)**:

1. $normalised\ entropy(\mathbf{p}) = \left[ \sum_i^N - p_i \log_2(p_i) \right] / \log_2(N)$

2. $energy(\mathbf{p}) = \sum_{i=1}^N p_i^2$

3. $maximum(\mathbf{p}) = \max_i p_i$

4. $standard\_deviation(\mathbf{p}) = \sqrt{\frac{1}{N-1} \sum_{i=1}^N (p_i - \bar{p})^2}$

5. coefficient of variation($\mathbf{p}$) = standard_deviation($\mathbf{p}$)/mean($\mathbf{p}$)

6. $smoothness(\mathbf{p}) = 1 - \frac{1}{1 + standard\_deviation(\mathbf{p})}$

where the vector p represents the probability distribution over activated output units $i$ = 1...N of output unit activation in the time window and N denotes the number samples presented in the time window, p (i) being the number at samples activating output unit $i$ divided by N.

7. average_distance $average\_distance(\mathbf{d}) = \frac{1}{W-1} \sum_{i=1}^{W-1} d(i, i+1)$

where W is the number of samples in a time window and , each element d(i,i+1) in the vector **d** represents the distance between the output unit activated at time $i$ and the output unit activated at time i+1.

The normalised entropy varies between 0 (static data) and approaches one for a highly dynamic input (a normalised entropy of 1 corresponding to an equal probability of activation for all output units). The energy of the probability distribution and the maximum probability have a maximum of one for the static case and are less in the dynamic case. The standard deviation, coefficient of variation and smoothness of the probability distribution have a minimum value of zero in the static case and increase for the dynamic case, with the smoothness approaching 1 for large standard deviations.

The chosen measures of the temporal variation is then compared to a threshold value to discriminate between static and dynamic data records and to partition the entire data set into data records for the first, static map and data records for classification with the second, dynamic map at step 218. In order to distinguish between the static and dynamic map, if a single selection parameter is used to distinguish between static and dynamic inputs, the selection parameter is compared to a predefined threshold which may have been set by hand or learned from the labelled training data.

In the examples presented above, the dynamic map would be used if the selection parameter exceeds this threshold. The selection threshold can be derived from the Euclidean distance between the means of the selection parameter of the two populations of static and dynamic input data or may be derived as a Bayesian estimate (that is an uncertainty-weighted average of means). Of course, more than one decision variable can be used in order to decrease the overall uncertainty of the selection, in which case the threshold would effectively be replaced with a selection boundary hyper- surface.

Once the data has been partitioned at step 218, class labels are assigned to the output units of the static map at step 220 using the data assigned to the static map at step 218. Output units which are activated at least once when the training data is presented at the inputs are labelled with the label of the class which most frequently activated the output unit in question (step 220). Output units which are not activated for any of the data records used for training are labelled with the class label of the nearest neighbour (step 222). The nearest neighbour is determined as the output unit which has a weight vector w is most similar to one of the units in question.

Once the map has been trained and the class labels have been assigned to the output units, it is determined whether there are sufficient data records for training the second map (i = 2; step 224). If a sufficient number of records is present, for example more than the number of records in the data set divided by the number of classes, temporal features are extracted from the data (step 226 discussed in more detail below), a new, dynamic map (i.e *i* = 2) is constructed (step 228) and the learning algorithm starts again at step 212 for the dynamic map. If there are only insufficient records remaining, learning stops (step 230).

As a further, optional, processing step, any data left over when learning stops can be used to assign labels to output units of the last map, for example for output units not otherwise assigned. For example, if there is insufficient data to learn a dynamic map, the data not yet used for the static map may be used to label output units of the static map.

Thus, the training algorithm for a dynamic map is in essence the same as for a static map, with the difference that each kind of map uses a different input representation. In the static case, the underlying sensor signal can be assumed not to change significantly within a time window and therefore one possibility for deriving an input for the static map would be to simply pick a sample of the record and use that as a feature vector. Of course, there are numerous ways of preparing the input data for the static map, for example the data records could be filtered in any other suitable fashion. For example, the data could be low pass filtered.

While the input for the static map can safely ignore any temporal variation of the signal (assumed to be noise), this very variation forms the basis for the input signal to the dynamic map. In principle, any measure of the temporal variation of the input vectors from one sample to the next may be suitable, for example the auto correlation function for a predefined number of sample delays calculated over a time window, the variance of the data vector, the maximum deviation or any other suitable measure of temporal variation.

Two particular examples of derived measures of the temporal variation of the input signals are the average peak area measured from the mean of each feature and the peak duration over each set of sensors (with a window size scaled to one).

$$\text{(Average Peak Area)}_f = \frac{\sum_{i \in W} x_{f,i} - m_f}{\text{(Number of Peaks in the Window)}_f} \, . \qquad (1)$$

$$\text{(Average Peak Duration)}_s = \frac{(Number \text{ of Sensors in the set)}_s}{\sum_{f \in S} \text{(Number of Peaks in the Window)}} \qquad (2)$$

where f denotes the feature index, *i* represents the sample index, s indicates the index of each sensor set S representing a set of features or values and W is the set of record index in the current window. The number of peaks or extreme values in each window can be estimated by counting the number of zero (mean) crossings.

The input to the dynamic map can thus be derived from the sensor data by calculating a derived measure of the temporal variation for each feature or by averaging over features, for each sensor. The derived measures are used to form a derived data vector (e.g. with one entry for each derived measure), each entry being applied to an input unit of the self organising map. Of course, the input may be formed from more than one of these measures and may comprise a combination of the measures discussed above. The input to the dynamic map may also include features extracted from the static map, for example entropy.

An alternative measure of temporal variation, calculated over output unit activation is a moving average of the positive area APA(t) and negative area ANA(t) with regard to the centre of each axis of the static map. That is:

$$APA(t) = \begin{cases} \dfrac{1}{\Omega} \sum_{\tau = t - \Omega + 1}^{t} c(\tau) - \dfrac{D+1}{2}, & if \quad c(\tau) > \dfrac{D+1}{2} \\ 0 & otherwise \end{cases}$$

$$ANA(t) = \begin{cases} \dfrac{1}{\Omega} \displaystyle\sum_{\tau=t-\Omega+1}^{t} \dfrac{D+1}{2} - c(\tau), & if \quad c(\tau) < \dfrac{D+1}{2} \\ 0 & otherwise \end{cases}$$

where $\Omega$ is the size of the shifted window, and D and $c(\tau)$ are the map dimension and the co-ordinate of the activated output unit along a given axis, respectively. These features, in fact, reflect the average position of the activated node trajectory with regard to each quadrant of the map.

Discussion up to this point has focussed on training of two maps, one static, and one dynamic but the training of more than two maps is equally envisaged. In this case, the output of the second, dynamic map can be used to calculate a further measure of temporal availability, this time over several time windows. For example, a person of limited fitness climbing a staircase could give rise to periods of stair climbing dispersed with periods of standing when the person catches his breath. This could result in a time changing pattern of the output of the second dynamic map which could be detected in the same way as a time changing output of the first, static map. If such secondary time changing behaviour is detected, a third map can be trained to classify the data using a suitable input representation. This corresponds to further iterations the loop between steps 212 and 224 to 228 to construct maps for *i* larger than one.

With the static and dynamic self organized maps trained to convergence, the respective class label assigned and a selection parameter and threshold being defined, inference comprises a two step procedure: a first step switching to the appropriate self organising map and a second step for classification.

In the specific embodiment described so far, the input data is supplied to the static map in a first step and the normalised entropy of the output of the static map or another of the measures described above is then used to decide whether:

(1) to use the static map for classification in the second step or;
(2) to use an appropriate representation of the input data of the record (as discussed above) applied to the dynamic map, with the output of the dynamic map then being used for classification.

The classification step then comprises reading of the class label previously associated with the winning output unit. The winning output unit is the unit which has the smallest distance, for example as measured by the dot product, between the input feature vector and its weight vector.

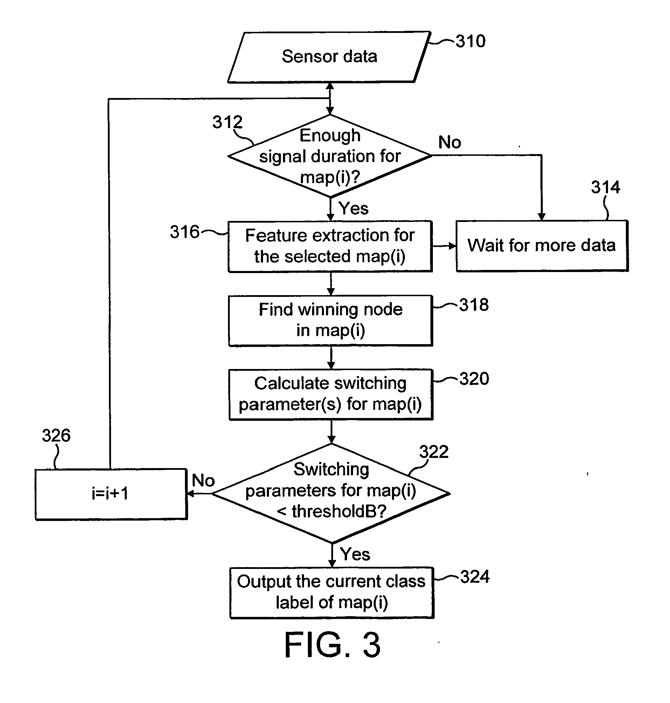

The inference algorithm of the specific embodiment is now described in detail with reference to Figure 3. When data is received at step 310, step 312 determines whether a sufficient number of samples has been received for the current map. Although, in principle, the first, static map can perform classification on only a single sample, in practice the need to calculate the entropy over a time window as a measure of the temporal variation of the output of the static map means that the inference algorithm must wait for a time window of samples to arrive. If at step 312 it is determined that insufficient data has been received so far, the algorithm waits at steps 314 for more data to arrive.

If a sufficient amount of data has been received as determined at steps 312 or 314, the algorithm proceeds to extract from the data the input features for the current map, that is the static map on the first iteration. For the static map, each sample collected within a time window is used to find a winning output unit of the map. At step 320, the switching parameter for the current map is calculated as outlined above, for example calculating the normalised entropy over all output units activated by the presented samples, as described above.

At the decision node 322 the algorithm determines whether the switching parameter is less than the previously determined threshold (in the case of normalised entropy, energy, maximum probability, or average distance being used as the switching parameter - in the case of standard deviation, coefficient of variation or smoothness of the probability distribution being used as switching parameter, steps 322 tests whether the threshold is exceeded). If the test at steps 322 is positive, the sensor data is assumed to come from a static underlying statistical distribution and the static map is used for classification, outputting the current class label determined at steps 318. If, as is likely, more than one output unit is a winning output unit when the samples of the time limit are presented to the map, the output unit which has been most frequently activated is picked to determine the class label.

If the test at steps 322 is negative, the counter *i* is increased by one and the next, dynamic map is used to classify the data. The algorithm loops back to step 312 to determine if sufficient data for the current, dynamic map has been received. As, in practice, a time window of data samples has been received before the algorithm starts processing the first map, the algorithm will usually proceed directly to step 316 at this stage and extract the features for the current dynamic map. As explained above, this will be a measure of the temporal variation of the data samples calculated over a time window.

Feature extraction at step 316 typically results in a single sample of features for a time window, which is applied to the dynamic map at steps 318 to find the winning output unit of the map. If only two maps are used, the winning output unit is used to determine the class label of map *i* corresponding to the presented sample and the algorithm steps directly to steps 324 to output the class labels.

If, on the other hand more than one dynamic map is used, steps 312 and 314 wait for a number of time windows to arrive before proceeding to step 316. This is because a number of samples of the derived measure representative of the temporal variation of the data have to be presented to the dynamic map in order to be able to calculate the switching parameters for the next map. Once sufficient data has been received, a number of samples, one for each received time window, is extracted at steps 316 and presented to the map at steps 318, the output of which is used to calculate the switching parameter at steps 320 which is then used to decide whether to use the output of the current map or refer to yet a further map at steps 322, as described above. Clearly, the maximum number of time that the algorithm can be iterated is determined by the number of sequential maps which are to be used for classification.

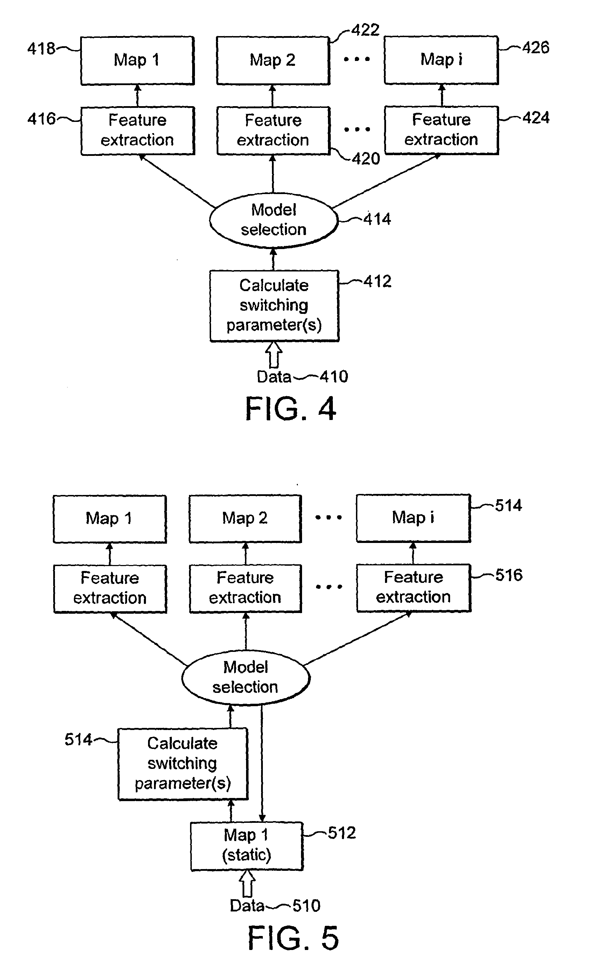

A number of alternative embodiments are now described with reference to Figures 4 and 5.

In the first alternative embodiment, the switching parameter or parameters 412 are calculated directly from the data 410, using any suitable measure of temporal variation of the data itself. For example, the average peak area or peak duration, as defined above, could be used to form a comparison to determine whether the data is static or dynamic. A number of other measures of temporal variation can also be used, for example the variance of the sampled features calculated over a time window, or a suitable auto-correlation at a given sample delay. Other measures that could be used particularly with acceleration sensors would be the maximum acceleration or the speed of the movement (integrated acceleration).

One or more of the measures are then used in model selection 414, comparing them to a threshold or a decision surface to make a decision on which map to use. If the data is determined to be static, a first, static map 418 is used after the appropriate feature has been extracted (416). If the data has been determined to be dynamic, the second, dynamic map 422 is selected after suitable feature extraction (420). A number of optional, further dynamic maps 426 with corresponding feature extraction (424) may can also be implemented, sub-partitioning the dynamic data. The sub-partitioning of the dynamic data may be based on, for example, a number of consecutive ranges of the selection parameter which are being associated with a corresponding map.

In order to train the maps of the alternative embodiment of Figure 4, essentially the same training algorithm as the one described with reference to Figure 2 can be used, with steps 218 and 220 being moved between steps 212 and 214. Furthermore, because the training data is labelled, a distinction between static and dynamic data can be made based on the class label (for example sitting being static, running being dynamic) so that there may be no need to calculate separate switching parameters for each data record (216). As the switching parameters are calculated directly on the sensor data, inference is also simplified. An appropriate map can be selected directly on the data and then be used for classification after appropriate feature extraction.

The alternative embodiment in Figure 5 represents a combination of the specific embodiment and the alternative embodiment of Figure 4. Data 510 is received by a static map 512 first and the output of the static map 512 is used to calculate switching parameter or parameters (514). The switching parameters is then used directly for model selection between static map 512 and one or more dynamic maps 514 with corresponding feature extraction 516. Similarly training, the maps is a combination of the learning algorithms described above, with the Figure 2 learning algorithm being used for the first map and the algorithm with steps 216 and 218 moved upwards being used for dynamic maps. Inference is similar to the Figure 4 alternative embodiment in that one of a plurality of alternative maps is selected based on the switching parameter. However, the inference algorithm is also similar to the inference algorithm of the specific embodiment in that the output of the static map is used to calculate the switching parameter, although there is no pipelining of maps as in the specific embodiments.

In order for a STSOM (or equivalently an SOM) to provide a good representation of the data, it is necessary that a sufficient number of output units is provided. For example, if an insufficient number of output units is provided, the STSOM will have insufficient expressive capacity and as a result may give a representation in which an output unit is activated by a number of classes. These classes are thus confused as far as the STSOM is concerned. One way to address this problem is to simply increase the overall number of output units. However, this is computationally costly. A less expensive strategy is to perform an adaptive local expansion to avoid the reconstruction of a larger map from scratch. Existing strategies developed for this purpose include the Growing Hierarchical Self-Organising Map (GH-SOM) by Rauber A, Merkl D, Dittenbach M. (The growing hierarchical self-organising map: exploratory analysis of high-dimensional data. IEEE Transactions on Neural Networks 2002; 13(6):1331-1341). It incorporates the concept of grid growing proposed by Fritzke (Growing grid: a self-organising network with constant neighbourhood range and adaptation strength. Neural Processing Letters 1995; 2(5): 9-13), to adaptively insert a new row or column of neurons between units with the largest deviation between the weighting and input vectors. The weighting vectors of the output units are then initialized with the average of their neighbours. The method also allows an expansion of each output unit with high quantisation error with a multi-layer SOM. Another approach is proposed by van Laerhoven K. Combining the self-organizing map and k-means clustering for on-line classification of sensor data. In: Proceedings of the International Conference on Artificial Neural Networks 2001; 464-469 which uses *k*-means sub-clusters to expand each neuron to avoid the overwriting of prototype vectors on the map.

The problem with these methods is that the expansion of the nodes does not directly take into account the class information and therefore the classification accuracy may not necessarily be improved. Consequently, as a further feature of the STSOM algorithm described above, a class-specific output unit expansion scheme is described below, that is when an output unit is expanded, all other output units belonging to the same class are also expanded. This approach is more efficient because it uses class information to guide the expansion of output units.

It is understood that the algorithms described below are equally applicable to a standard SOM, which is clear from the description below because the algorithm is, amongst others, applied to the static layer of the STSOM, corresponding to a conventional SOM. However, in the context of STSOMs, the expansion of the output units is only performed when there is a reasonable level of support by data from different classes. This is important as it avoids the expansion of output units corresponding to transitions of the dynamic classes.

The first step of the algorithm is to generate a static map based on the feature vectors of the original signal or data records. Once the static map is generated, a *confusion matrix* is constructed based on this map alone. The confusion matrix contains information about the actual and predicted classifications obtained from the classification system. The diagonal elements of the matrix represent the number of correct classifications, *ie*, cases in which the classifier returns the same predicted class as the actual class. The off-diagonal elements represent the number of misclassifications and can be used as an indication of class overlap.

The next step is to identify class overlap to form a set of combined-classes. One method of achieving this is to use hierarchical clustering which treats each row as a singleton cluster and then successively merges clusters to form a *dendrogram (*Godbole S, Sarawagi S, Chakrabarti S. Scaling multi-class support vector machines using intere-class confusion. In: Proceedings of the Eighth ACMSIGKDD International Converence on Knowledge Discover and Data Mining 2002; 513-518*).* The distance measure (or similarity measure) may be based on the off-diagonal element of the confusion matrix between class pairs. Since the confusion matrix is asymmetric, single linkage hierarchical clustering is used. In each step the two clusters whose two closest members have the smallest distance are merged. Sub-groups representing the combined classes can be formed by applying a threshold to the output dendrogram at the point where between-cluster distances increase sharply.

The subsequent steps of the STSOM algorithm are to use the algorithms described to separate class overlaps, either by introducing dynamic maps or through adaptive output unit expansion. To separate static from dynamic activations, the normalised index entropy can be used, for example. This will upgrade activations associated with a dynamic class to a dynamic map, potentially leaving any static class clustered with the dynamic class unambiguously classified. If a dynamic class is overlapped with more than one static class, adaptive output unit expansion as described above can be applied to the remaining static classes after the dynamic class is filtered out to a dynamic map.

The final step in the class separation process is to resolve the static-static overlap (i.e. the class overlap between static classes which are clustered as confused). This can be achieved by output unit expansion as described above.

A specific example of output unit expansion applied to a STSOM algorithm is provided below for both model learning and inference.

**Model learning:**

    1) Train a static map with a standard SOM training algorithm.

    2) Assign the class label to each output unit by:

        (a) Applying the static map on the training set and keeping a record of activation frequency of each output unit;
        (b) Pruning out the labels of output units with activation frequency lower than a specified threshold;
        (c) Assigning a label to an unlabelled output unit with the label of the nearest labelled neighbour.

    3) Form sub-clusters of confused classes by:

        (a) Applying the static map to the training set;
        (b) Calculating a confusion matrix;
        (c) Creating a list of between-class distances and keeping only the pairs with values that are greater than a specified threshold;
        (d) Performing single link clustering based on the distance list;
        (e) Representing each independent spanning tree as a subcluster of confused classes.

4) If the distance list is empty, relabel the static map by repeating steps 2(a) and 2(c), output the map and terminate. Otherwise, calculate the index entropy of the classes in the confused subclusters.

5) Extract data samples for dynamic map training

(a) Partition the data of a confused class using the index entropy calculated over a fixed window $\Omega_e$;
(b) Determine if the confused class is a static or dynamic class based on the corresponding entropy of the partition with the largest number of data samples..

6) Perform feature extraction on the outputs of the static map for the samples that correspond to the dynamic classes and use them to construct the dynamic map.

7) For each subcluster of confused static classes, create a higher layer static map; allocate an integer array to store the class-to-map index.

8) Keep a record of the labelled maps, entropy threshold, window size, features used, and class-to-map index for model inference.

**Model Inference:**

1. For each input vector, $x_s(t)$ ($t$ is the time step index), determine the winning output unit, $i_s(t)$ of the static map $s$.

2. Calculate the index entropy over a fixed window $\Omega_e$.

3. If the entropy is higher than a specified threshold,

- Calculate input vector $\mathbf{x}_d(t)$ for the dynamic map $d$;
- Determine the winning output unit, $i_d(t)$;
- Output the label of the output unit $i_d(t)$.

Otherwise,

(a) Use the label of the output unit $i_s(t)$ and the class-to-map index to determine the appropriate static map:

$$h = \text{class-to-map}\Big[\text{label}\big(i_s(t)\big)\Big].$$

(b) If map $h$ is the same as map $s$, output the label of the output unit $i_s(t)$, otherwise

- outputBased on the input vector $i_s(t)$, determine the winning neuron, $i_h(t)$ of the static map $h$;

- Output the label of the output unit $i_h(t)$.

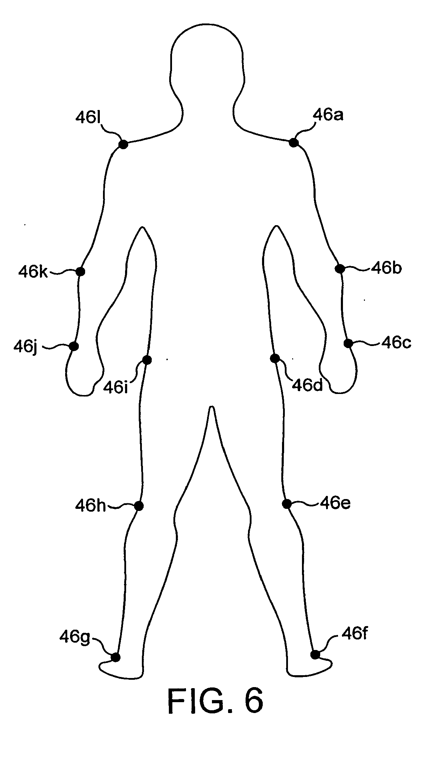

A specific example of the STSOM algorithm described above being applied is now described with reference to Figure 6, showing a human subject 44 with a set of acceleration sensors 46a to 46g attached at various locations on the body. The algorithm is used to infer a subject's body posture or activity from the acceleration sensors on the subject's body.

The sensors 46a to 46g detect acceleration of the body at the sensor location, including a constant acceleration due to gravity. Each sensor measures acceleration along three pendicular axes and it is therefore possible to derive both the orientation of the sensor with respect to gravity from a constant component of the sensor signal, as well as information on the subject's movement from the temporal variations of the acceleration signals.

As shown in Figure 6, sensors are positioned across the body (one for each shoulder, elbow, wrist, knee and ankle) giving a total of 36 channels or features (3 per sensor) transmitted to a central processor of sufficient processing capacity. It is understood that other sensor configurations are equally envisaged. For example sensors may be placed only one half of the body (for example using only sensors 46g to 1) or may be positioned to provide optimal differentiation between the classes in question. Given the relatively low computational burden associated both with the calculation of the self organising map and the selection parameter, any commercially available personal or even hand-held computer should be sufficient for the task and, in fact a micro controller maybe sufficient.

Specifically, signals are sampled at 50 Hz and analysed in time windows of 50 samples. Generally, window sizes of 1 to 2 seconds are appropriate for the specific application described here. The number of input units of the static and the dynamic map depends on the input representation used. For example, if a single sample is used for the static map and the average peak area is used for the dynamic map, the number of input units receiving the features vectors will be equal to the number of sensor channels, that is 36 in the example at Figure 3. The output units of the static map are arranged as a 4 x 4 rectangular grid and a maximum of up to 16 different classes can thus be captured. The output units of the dynamic map are arranged as a 6 x 6 rectangular grid and up to 36 different activities can thus be captured by this map. In practice, the distribution of classes over the output units tends to be sub-optimal and the effective number of classes which can be stored is therefore less than the maximum referred to above. While the output units have been arranged on a rectangular grid in the specific example, it will be evident to the skilled person that other geometrical arrangements of the output units may also be used

In an alternative, embedded implementation, a set of self organised maps (for example static and dynamic) is provided on a single circuit board together with the acceleration sensors. The self organised maps (including the map selection algorithm) can be implemented on a suitably programmed integrated circuit or chip. Alternatively, an analogue implementation is also envisaged.

Each embedded sensor/processing unit does the selection and map processing for its own three channel sensor signal and transmits only the output of the self organised maps to a central processor. In the example of a 4 x 4 static map and a 6 x 6 dynamic map only 6 bits per time window are required in a simple transmission scheme to transmit the identity of the winning output unit of the self organising map. A 6-bit binary word may thus be used to encode a label identifying each output unit and only the label of the winning output unit is transmitted for each time window. This represents a large saving in power and bandwidth required for transmission to the central processor, as compared to the requirements for transmitting the digitised sensor signals (for example, assuming only 16 digitisation levels and a time window of 50 samples, 4 x 50 = 200 bits are required to transmit the raw data collected during the time window). Other, more efficient transmission schemes are also envisaged, for example an embedded unit could transmit a signal only when the winning output unit changes.

As discussed above, the output of each embedded self organised map is transmitted to a central processor. In the embedded implementation, one of the embedded self organised maps may act as a master and receive the outputs of all the other self organised maps in order to produce a classification result. Alternatively, transmission of the output of the self organised map to a more powerful processor such as a personal or handheld computer is envisaged allowing more involved processing of the individual outputs and further data fusion. For example, a Bayesian classifier could be used for classification based on the individual self organised map outputs, which would allow the uncertainty associated with the output of each map or any other sources of information to be taken into account.

The classification algorithms described above and, in particular, the implementation with respect to a set of acceleration (and thus orientation) sensors can be applied in a range of fields where monitoring of a person's activity is important. For example, context information is generally important in healthcare monitoring. For instance, reliable detection of the activity of a patient from whom physiological signals are sampled is important to the correct interpretation of these signals. The underlying cause of a rapid heartbeat and degenerated electro cardiogram signal can be caused by vigorous movement of the patient, as well as arrhythmia. Thus, the proposed classification algorithm can be used in conjunction with such clinical monitoring techniques for a more reliable detection of clinical results.

The detection of a range of activities, both in its own right and to provide a context for further physiological measurement, is of particular importance in the monitoring of patients in home care. The proposed classification algorithm therefore finds particular application in remote medicine where the patient can be monitored living at home and appropriate action can be taken if the processed measurements indicate that this is necessary. Activity information for both identification of temporally and spatially different daily living activity such as eating, drinking, reading or resting may be detected and, furthermore, activity states related to emotion may be identified such as agitation, restlessness or pacing up and down. Detection of abnormal individual events or activities can be extremely valuable in the context of maintaining independent living for the frail and elderly by health and social care monitoring.

The signals derived from the acceleration sensors can also be used to derive a person's gestures and may be used as a novel user interface. Different hand and body movements can be interpreted as different input commands for controlling a device or process, for example turning electrical appliances on or off in the home environment or navigating through windows on a computer screen. For entertainment, detected gesture information can be fed into a synthesiser to generate electronic music or gestures may be used as an input interface to computer games. A further application of gesture recognition is in surgical training where accurate detection of movements is central to the skill assessment of a training surgeon. Particularly, hand gesture analysis may provide a new approach for surgical skill assessment. In this case the 3-dimensional positions of the hand and fingers can be acquired using optical or electro-magnetic sensors and/or a cyber-glove and the output from the sensor can be used as an input to a static or dynamic self organising map, as appropriate.

Achieving generalisation between users in activity or gesture recognition requires user dependent features to be eliminated. On the other hand, in a bio-metrics application, these user dependent features may be used as an input for user identification. User specific gait information, for example, may be a potential solution for enhancing existing security systems and monitoring health or fitness with a readily available biometric input source.

Finally, in addition to human movement monitoring, the proposed algorithm can be used for object, environment or interaction monitoring which involves sensors deployed in a household environment. For example, the proposed algorithm may be used to produce a summarised behaviour profile of usage of water, gas and electrical appliances in the home environment. These profiles can then be used to indicate and predict the well being of the residents.

The embodiments discussed above describe a spatio-temporal classification method. It will be apparent to a skilled person that such a method can be employed in a number of contexts in addition to the ones mentioned specifically above. The specific embodiments described above are meant to illustrate, by way of example only, the invention, which is defined by the claims set out below.

### Claims

1.    A method of monitoring a subject including classifying a data record (112, 410, 510) sampled from a body sensor network (46a - 1) distributed across the subject's body as belonging to one of a plurality of classes including both postures and activities of the subject, said classifying using self - organizing maps, the data record comprising a plurality of data samples, each sample comprising a plurality of features derived from a value sampled from a signal of the body sensor network at a point in time, the method being **characterised by**:

     (a) defining a selection variable indicative of the temporal variation of the sensor signals within a time window (114, 412, 512);
     (b) defining a selection criterion distinguishing between activities and postures for the selection variable;
     (c) comparing a value of the selection variable to the selection criterion to select one of a plurality of self organising maps based on the selection variable, the maps each having a plurality of input and output units (116, 414, 514);
     (d) deriving an input for the selected map from the data samples within the time window in accordance with an input representation corresponding to the selected map (117, 416, 420, 424, 516);
     (e) applying the input to the selected map; and
     (f) classifying the data record based on a winning output unit of the selected map as belonging to one of the plurality of classes.

2.    A method as claimed in claim 1, the selection variable being a measure of the variability of the output units of one of the self organising maps calculated over the time window.

3.    A method as claimed in claim 2, the selection variable being a normalised entropy of a probability distribution over winning output units calculated over the time window, a value of the probability distribution for a winning output unit being a number of samples for which said output unit is a winning output unit divided by a number of samples in the time window.

4.    A method as claimed in claim any one of the proceeding claims, the method including applying data samples (510) of a time window to a first map (512) and using the output of the first map to calculate the selection variable (514); the method further comprising deciding based on the selection variable whether to use the first map or a second map for classifying the data.

5.    A method as claimed in claim 1, the selection variable being a measure of the temporal variability of the data samples.

6.    A method as claimed in any one of the preceding claims, the selection criterion comprising a threshold or a decision surface distinguishing static and dynamic data records, the static data records being sampled from a sensor signal having a substantially constant statistical distribution and the dynamic data records being sampled from a sensor signal having a time varying statistical distribution.

7.    A method as claimed in claim 6, the input representation for a data record determined to be a dynamic data set comprising an average peak duration calculated over a set of features as the number of features in the set divided by the sum of the number of local extreme values of each feature within the time window.

8. A method as claimed in claim 6, the input representation for a data record determined to be a dynamic data record comprising an average peak area calculated for each feature, calculated as the sum over all records in the time window of the absolute difference between the value of each respective feature of each record and the average value of that feature calculated over all records within the time window, divided by the number of extreme values within the time window.

9. A method as claimed in any one of the preceding claims in which classifying the data record includes:

g) looking up an associated map associated with the winning output unit in a table associating maps with output units or labels associated with output units;
h) if the associated map is the said self-organising map, classifying the data record using a label associated with the winning output unit; and otherwise
i) applying the data record to the associated map and classifying it based on a winning output unit of that map.

10. A method as claimed in claim 1 including deriving an input for a first map from the data samples within the time window in accordance with an input representation corresponding to the first map, applying the input to the first map and calculating the value of the selection variable as a measure of temporal variability of the output units of the first map over the time window and, subsequently, comparing the value of the selection variable to the selection criterion to select between the first and another map.

11. A system adapted to implement a method as claimed in any one of the preceding claims.

12. A system as claimed in claim 11, the system comprising a plurality of sensor/processing units (46a-1), each unit comprising one or more sensors and a selector arranged to define a selection variable indicative of the temporal variation of the sensor signals within a time window and a selection criterion for the selection variable, the selector further being arranged to compare a value of the selection variable to the selection criterion to select an input representation for a self organising map, the map having a plurality of input and output units and deriving an input from the data records within the time window in accordance with the selected input representation; the unit further comprising an interface for applying the input to a self organising map corresponding to the input representation and a transmitter for transmitting the output of said self organising map to a central processor.

13. A computer readable medium carrying a computer program comprising computer code instructions for implementing a method as claimed in any one of claims 1 to 10.

14. An electromagnetic signal representative of a computer program comprising computer code instructions for implementing a method as claimed in any one of claims 1 to 10.

15. A method of training a classifier for use in monitoring a subject by classifying data record sampled from a body sensor network (46a - 1) distributed across the subject's body as belonging to one of a plurality of classes including both postures and activities of the subject, the data record comprising a plurality of data samples and each sample comprising a plurality of features derived from a value sampled from a signal of the body sensor network at a point in time, the method being **characterised by**:

(a) sampling a plurality of samples from a plurality of static and dynamic records, the static records having been obtained from postures and the dynamic records having been obtained from activities,belonging to a plurality of classes; using the said samples as an input to train a first self organised map for classifying static records (214);
(b) calculating a measure of temporal variability of the samples within each record (216) and partitioning the plurality of records into static and dynamic records based on said measure.
(c) computing a derived representation representative of a temporal variation of the features of a dynamic data record within a time window (226);
(d) using the derived representation as an input for a second self - organised map (228); and
(e) updating the parameters of the second self-organised map according to a training algorithm (214).

16. A method of training a classifier as claimed in claim 15, including calculating a confusion matrix for a plurality of classes associated with output units of a self-organised map for a plurality of labelled data records; clustering together classes which are determined to be confused into confused clusters associating each of the classes of a confused cluster with a further self-organised map and using those data records labelled as belonging to a class of a particular confused cluster as an input to a corresponding further self-organised map to train it.

**Patentansprüche**

1. Verfahren zur Überwachung eines Probanden, umfassend die Klassifizierung einer Datenaufzeichnung (112, 410, 510), die von einem über den Körper des Probanden verteilten Körper-Sensor-Netz (46a - 1) abgefragt wurde, als zu einer von mehreren Klassen einschließlich sowohl Körperhaltungen als auch Aktivitäten des Probanden zugehörig, wobei die Klassifizierung selbstorganisierende Karten verwendet, die Datenaufzeichnung mehrere Datenabfragen umfasst und jede Abfrage mehrere Merkmale umfasst, die von einem Wert abgeleitet werden; der von einem Signal des Körper-Sensor-Netzes zu einem Zeitpunkt abgefragt wird, wobei das Verfahren **gekennzeichnet ist durch**:

    (a) Definieren einer Auswahlvariablen, die die zeitliche Schwankung der Sensorsignale innerhalb eines Zeitfensters (114, 412, 512) anzeigt,
    (b) Definieren eines Auswahlkriteriums, das für die Auswahlvariable zwischen Aktivitäten und Körperhaltungen unterscheidet,
    (c) Vergleichen eines Wertes der Auswahlvariablen mit dem Auswahlkriterium, um basierend auf der Auswahlvariablen eine von mehreren selbstorganisierenden Karten auszuwählen, wobei jede der Karten mehrere Eingabe- und Ausgabeeinheiten (116, 414, 514) aufweist,
    (d) Ableiten einer Eingabe für die ausgewählte Karte aus den Datenabfragen innerhalb des Zeitfensters gemäß einer Eingabedarstellung entsprechend der ausgewählten Karte (117, 416,420, 424, 516),
    (e) Anwenden der Eingabe auf die ausgewählte Karte und (f) Klassifizieren der Datenaufzeichnung basierend auf einer besten Ausgabeeinheit der ausgewählten Karte, als zu einer der mehreren Klassen zugehörig.

2. Verfahren nach Anspruch 1, wobei die Auswahlvariable eine Messung der Variabilität der Ausgabeeinheiten einer der selbstorganisierenden Karten ist, die im Zeitfenster berechnet werden.

3. Verfahren nach Anspruch 2, wobei die Auswahlvariable eine normalisierte Entropie einer Wahrscheinlichkeitsverteilung über die besten Ausgabeeinheiten ist, die im Zeitfenster berechnet werden, wobei ein Wert der Wahrscheinlichkeitsverteilung für eine beste Ausgabeeinheit eine Anzahl von Abfragen ist, für welche die Ausgabeeinheit eine beste Ausgabeeinheit ist, dividiert durch eine Anzahl von Abfragen im Zeitfenster.

4. Verfahren nach einem der vorhergehenden Ansprüche, wobei das Verfahren das Anwenden der Datenabfragen (510) eines Zeitfensters auf eine erste Karte (512) und das Verwenden der Ausgabe der ersten Karte zum Berechnen der Auswahlvariablen (514) umfasst, wobei das Verfahren ferner das Entscheiden basierend auf der Auswahlvariablen umfasst, ob zur Klassifizierung der Daten die erste Karte oder eine zweite Karte verwendet wird.

5. Verfahren nach Anspruch 1, wobei die Auswahlvariable ein Maß für die zeitliche Variabilität der Datenabfragen ist.

6. Verfahren nach einem der vorhergehenden Ansprüche, wobei das Auswahlkriterium einen Grenzwert oder eine Entscheidungsbegrenzung umfasst, die statische und dynamische Datenaufzeichnungen unterscheidet, wobei die statischen Datenaufzeichnungen von einem Sensorsignal abgefragt werden, das eine im Wesentlichen konstante statistische Verteilung aufweist, und die dynamischen Datenaufzeichnungen von einem Sensorsignal abgefragt werden, das eine zeitlich varrierende statistische Verteilung aufweist.

7. Verfahren nach Anspruch 6, wobei die Eingabedarstellung für eine Datenaufzeichnung, die als ein dynamischer Datensatz bestimmt wurde, eine durchschnittliche Spitzenwertdauer umfasst, die über eine Gruppe von Merkmalen als die Anzahl von Merkmalen in der Gruppe, dividiert durch die Summe der Anzahl der lokalen Extremwerte jedes Merkmals innerhalb des Zeitfensters berechnet wurde.

8. Verfahren nach Anspruch 6, wobei die Eingabedarstellung für eine als ein dynamischer Datensatz bestimmte Datenaufzeichnung einen für jedes Merkmal berechneten durchschnittlichen Spitzenwertbereich umfasst, der als Summe über alle Aufzeichnungen im Zeitfenster der absoluten Differenz zwischen dem Wert jedes entsprechenden Merkmals jeder Aufzeichnung und dem Durchschnittswert dieses Merkmals, berechnet über alle Aufzeichnungen innerhalb des Zeitfensters, berechnet wurde, dividiert durch die Anzahl der Extremwerte im Zeitfenster.

9. Verfahren nach einem der vorhergehenden Ansprüche, wobei die Klassifizierung der Datenaufzeichnungen Folgendes umfasst:

    (g) Nachschlagen einer zugeordneten Karte, die der besten Ausgabeeinheit zugeordnet ist, in einer Tabelle, welche die Karten Ausgabeeinheiten oder Kennsätzen, die Ausgabeeinheiten zugeordnet sind, zuordnet,

(h) Klassifizieren der Datenaufzeichnung mithilfe eines Kennsatzes, der der besten Ausgabeeinheit zugeordnet ist, wenn die zugeordnete Karte die selbstorganisierende Karte ist, und anderenfalls

(i) Anwenden der Datenaufzeichnung auf die zugeordnete Karte und Klassifizieren der Datenaufzeichnung basierend auf einer besten Ausgabeeinheit dieser Karte.

**10.** Verfahren nach Anspruch 1, enthaltend das Ableiten einer Eingabe für eine erste Karte von den Datenabfragen innerhalb des Zeitfensters gemäß einer Eingabedarstellung, die der ersten Karte entspricht, das Anwenden der Eingabe auf die erste Karte und Berechnen des Wertes der Auswahlvariablen als ein Maß für die zeitliche Variabilität der Ausgabeeinheiten der ersten Karte über das Zeitfenster und anschließend das Vergleichen des Wertes der Auswahlvariablen mit dem Auswahlkriterium, um die erste oder eine andere Karte auszuwählen.

**11.** System, das dafür eingerichtet ist, ein Verfahren nach einem der vorhergehenden Ansprüche auszuführen.

**12.** System nach Anspruch 11, wobei das System mehrere Sensor-/Verarbeitungseinheiten (46a - 1) umfasst, wobei jede Einheit einen oder mehrere Sensoren und einen Selektor umfasst, der eingerichtet ist, eine Auswahlvariable, die die zeitliche Schwankung der Sensorsignale innerhalb eines Zeitfensters anzeigt, und ein Auswahlkriterium für die Auswahlvariable zu definieren, wobei der Selektor ferner eingerichtet ist, einen Wert der Auswahlvariablen mit dem Auswahlkriterium zu vergleichen, um eine Eingabedarstellung für eine selbstorganisierende Karte auszuwählen, wobei die Karte mehrere Eingabe- und Ausgabeeinheiten aufweist und eine Eingabe aus den Datenaufzeichnungen im Zeitfenster gemäß der ausgewählten Eingabedarstellung ableitet, wobei die Einheit ferner eine Schnittstelle zum Anwenden der Eingabe auf eine selbstorganisierende Karte entsprechend der Eingabedarstellung und einen Sender zum Senden der Ausgabe der selbstorganisierenden Karte zu einem Zentralprozessor aufweist.

**13.** Computerlesbares Medium, das ein Computerprogramm trägt, welches Computercode-Befehle zum Ausführen eines Verfahrens nach einem der Ansprüche 1 bis 10 umfasst.

**14.** Elektromagnetisches Signal, das ein Computerprogramm darstellt, das Computercode-Befehle zum Ausführen eines Verfahrens nach einem der Ansprüche 1 bis 10 umfasst.

**15.** Verfahren zum Trainieren eines Klassierers zur Verwendung bei der Überwachung eines Probanden durch Klassifizieren von Datenaufzeichnungen, die aus einem über den Körper eines Probanden ausgebreiteten Körper-Sensor-Netz (46a - 1) abgefragt werden, als zu einer von mehreren Klassen einschließlich sowohl Körperhaltungen als auch Aktivitäten des Probanden zugehörig, wobei die Datenaufzeichnung mehrere Datenabfragen umfasst und jede Abfrage mehrere Merkmale umfasst, die von einem Wert abgeleitet werden, der vom Signal des Körper-Sensor-Netzes zu einem Zeitpunkt abgefragt werden, wobei das Verfahren **gekennzeichnet ist durch**:

(a) Abfragen mehrerer Abfragen aus mehreren statischen und dynamischen Aufzeichnungen, die zu mehreren Klassen gehören, wobei die statischen Aufzeichnungen aus Körperhaltungen und die dynamischen Aufzeichnungen aus Aktivitäten gewonnen wurden, und Verwenden der Abfragen als Eingabe, um eine erste selbstorganisierende Karte zum Klassifizieren von statischen Aufzeichnungen (214) zu trainieren,

(b) Berechnen eines Maßes für eine zeitliche Variabilität der Abfragen in jeder Aufzeichnung (216) und, basierend auf dem Maß, Aufteilen der mehreren Aufzeichnungen in statische und dynamische Aufzeichnungen,

(c) Berechnen eine abgeleiteten Darstellung, die für eine zeitliche Variation der Merkmale einer dynamischen Datenaufzeichnung in einem Zeitfenster (226) repräsentativ ist,

(d) Verwenden der abgeleiteten Darstellung als eine Eingabe für eine zweite selbstorganisierende Karte (228), und

(e) Aktualisieren der Parameter der zweiten selbstorganisierenden Karte gemäß eines Trainingsalgorithmus (214).

**16.** Verfahren zum Trainieren eines Klassierers nach Anspruch 15, enthaltend das Berechnen einer Konfusionsmatrix für mehrere Klassen, die Ausgabeeinheiten einer selbstorganisierenden Karte für mehrere **gekennzeichnet**e Datenaufzeichnungen zugeordnet sind, die Clusterbildung von Klassen, welche als konfus bestimmt wurden, in konfusen Clustern, wobei jede der Klassen eines konfusen Clusters einer weiteren selbstorganisierenden Karte zugeordnet wird, und Verwenden der Datenaufzeichnungen, die als zu einer Klasse eines bestimmten konfusen Clusters zugehörig **gekennzeichnet** sind, als Eingabe in eine entsprechende weitere selbstorganisierende Karte, um diese zu trainieren.

**Revendications**

1. Procédé de surveillance d'un sujet comprenant la classification d'un enregistrement de données (112, 410, 510) échantillonnées à partir d'un réseau de capteurs corporels (46a - 1) répartis sur le corps d'un sujet comme appartenant à une d'une pluralité de catégories incluant à la fois des postures et activités du sujet, ladite classification utilisant des cartes d'auto-organisation, l'enregistrement des données comprenant une pluralité d'échantillons de données, chaque échantillon comprenant une pluralité de caractéristiques dérivées d'une valeur échantillonnée à partir d'un signal du réseau de capteurs corporels à un moment dans le temps, le procédé étant **caractérisé en ce qu'**il consiste à :

   (a) définir une variable de sélection indiquant la variation temporelle des signaux de capteurs à l'intérieur d'une fenêtre temporelle (114, 412, 512) ;
   (b) définir un critère de sélection distinguant entre activités et postures pour la variable de sélection ;
   (c) comparer une valeur de la variable de sélection au critère de sélection pour sélectionner une d'une pluralité de cartes d'auto-organisation sur la base de la variable de sélection, les cartes ayant chacune une pluralité d'unités d'entrée et de sortie (116, 414, 514) ;
   (d) dériver une entrée pour la carte sélectionnée des échantillons de données à l'intérieur de la fenêtre temporelle selon une représentation d'entrée correspondant à la carte sélectionnée (117, 416, 420, 424, 516) ;
   (e) appliquer l'entrée à la carte sélectionnée ; et
   (f) classifier l'enregistrement de données sur la base d'une unité de sortie gagnante de la carte sélectionnée comme appartenant à une de la pluralité de catégories.

2. Procédé selon la revendication 1, la variable de sélection étant une mesure de la variabilité des unités de sortie d'une des cartes d'auto-organisation calculée sur la fenêtre temporelle.

3. Procédé selon la revendication 2, la variable de sélection étant une entropie normalisée d'une distribution de probabilités sur les unités de sortie gagnantes calculée sur la fenêtre temporelle, une valeur de la distribution de probabilités pour une unité de sortie gagnante étant un nombre d'échantillons pour lesquels ladite unité de sortie est une unité de sortie gagnante divisé par un nombre d'échantillons dans la fenêtre temporelle.

4. Procédé selon l'une quelconque des revendications précédentes, le procédé consistant à appliquer les échantillons de données (510) d'une fenêtre temporelle à une première carte (512) et à utiliser la sortie de la première carte pour calculer la variable de sélection (514) ; le procédé consistant en outre à décider sur la base de la variable de sélection s'il faut utiliser la première carte ou une seconde carte pour classifier les données.

5. Procédé selon la revendication 1, la variable de sélection étant une mesure de la variabilité temporelle des échantillons de données.

6. Procédé selon l'une quelconque des revendications précédentes, le critère de sélection comprenant un seuil ou une surface de décision distinguant les enregistrements de données statiques et dynamiques, les enregistrements de données statiques étant échantillonnés à partir d'un signal de capteur ayant une distribution statistique sensiblement constante et les enregistrements de données dynamiques étant échantillonnés à partir d'un signal de capteur ayant une distribution statistique variant dans le temps.

7. Procédé selon la revendication 6, la représentation d'entrée pour un enregistrement de données déterminé comme étant un ensemble de données dynamiques comprenant une durée pic moyenne calculée sur un ensemble de caractéristiques comme le nombre de caractéristiques dans l'ensemble divisé par la somme du nombre de valeurs extrêmes locales de chaque caractéristique à l'intérieur de la fenêtre temporelle.

8. Procédé selon la revendication 6, la représentation d'entrée pour un enregistrement de données déterminé comme étant un enregistrement de données dynamiques comprenant une zone pic moyenne calculée pour chaque caractéristique, calculée comme la somme sur l'ensemble des enregistrements dans la fenêtre temporelle de la différence absolue entre la valeur de chaque caractéristique respective de chaque enregistrement et la valeur moyenne de cette caractéristique calculée sur l'ensemble des enregistrements à l'intérieur de la fenêtre temporelle, divisée par le nombre de valeurs extrêmes à l'intérieur de la fenêtre temporelle.

9. Procédé selon l'une quelconque des revendications précédentes, dans lequel la classification de l'enregistrement de données consiste à :

g) rechercher une carte associée, associée à l'unité de sortie gagnante dans une table associant les cartes aux unités de sortie ou des étiquettes associées aux unités de sortie ;

h) si la carte associée est ladite carte d'auto-organisation, classifier l'enregistrement de données en utilisant une étiquette associée à l'unité de sortie gagnante ; et sinon

i) appliquer l'enregistrement de données à la carte associée et le classifier sur la base d'une unité de sortie gagnante de cette carte.

**10.** Procédé selon la revendication 1, consistant à dériver une entrée pour une première carte des échantillons de données à l'intérieur de la fenêtre temporelle selon une représentation d'entrée correspondant à la première carte, à appliquer l'entrée à la première carte et à calculer la valeur de la variable de sélection en tant que mesure de la variabilité temporelle des unités de sortie de la première carte sur la fenêtre temporelle et, ensuite, à comparer la valeur de la variable de sélection au critère de sélection pour choisir entre la première carte et une autre carte.

**11.** Système conçu pour mettre en oeuvre un procédé selon l'une quelconque des revendications précédentes.

**12.** Système selon la revendication 11, le système comprenant une pluralité d'unités de détection/traitement (46a-1), chaque unité comprenant un ou plusieurs capteurs et un sélecteur conçu pour définir une variable de sélection indiquant la variation temporelle des signaux de capteur à l'intérieur d'une fenêtre temporelle et un critère de sélection pour la variable de sélection, le sélecteur étant en outre conçu pour comparer une valeur de la variable de sélection au critère de sélection pour sélectionner une représentation d'entrée pour une carte d'auto-organisation, la carte ayant une pluralité d'unités d'entrée et de sortie et dérivant une entrée des enregistrements de données à l'intérieur de la fenêtre temporelle selon la représentation d'entrée sélectionnée ; l'unité comprenant en outre une interface pour appliquer l'entrée à une carte d'auto-organisation correspondant à la représentation d'entrée et un émetteur destiné à émettre la sortie de ladite carte d'auto-organisation vers un processeur central.

**13.** Support lisible par ordinateur supportant un programme informatique comprenant des instructions de codes informatiques pour mettre en oeuvre un procédé selon l'une quelconque des revendications 1 à 10.

**14.** Signal électromagnétique représentatif d'un programme informatique comprenant des instructions de codes informatiques pour mettre en oeuvre un procédé selon l'une quelconque des revendications 1 à 10.

**15.** Procédé de formation d'un classificateur destiné à être utilisé pour surveiller un sujet en classifiant un enregistrement de données échantillonnées à partir d'un réseau de capteurs corporels (46a-1) répartis sur le corps du sujet comme appartenant à une d'une pluralité de catégories incluant à la fois des postures et activités du sujet, l'enregistrement de données comprenant une pluralité d'échantillons de données et chaque échantillon comprenant une pluralité de caractéristiques dérivées d'une valeur échantillonnée à partir d'un signal d'un réseau de capteurs corporels à un moment dans le temps, le procédé étant **caractérisé en ce qu'**il consiste à :

(a) échantillonner une pluralité d'échantillons à partir d'une pluralité d'enregistrements statiques et dynamiques, les enregistrements statiques ayant été obtenus à partir de postures et les enregistrements dynamiques ayant été obtenus à partir d'activités, appartenant à une pluralité de catégories ; utiliser lesdits échantillons comme une entrée pour former une première carte auto-organisée pour classifier les enregistrements statiques (214) ;

(b) calculer une mesure de la variabilité temporelle des échantillons à l'intérieur de chaque enregistrement (216) et séparer la pluralité d'enregistrements en enregistrements statiques et dynamiques sur la base de ladite mesure ;

(c) calculer une représentation dérivée représentative d'une variation temporelle des caractéristiques d'un enregistrement de données dynamiques à l'intérieur d'une fenêtre temporelle (226) ;

(d) utiliser la représentation dérivée comme une entrée pour une seconde carte auto-organisée (228) ; et

(e) mettre à jour les paramètres de la seconde carte auto-organisée selon un algorithme de formation (214).

**16.** Procédé de formation d'un classificateur selon la revendication 15, consistant à calculer une matrice de confusion pour une pluralité de catégories associées aux unités de sortie d'une carte auto-organisée pour une pluralité d'enregistrements de données étiquetés ; rassembler les catégories qui sont déterminées comme étant confuses en groupes confus associant chacune des catégories d'un groupe confus à une autre carte auto-organisée et utilisant ces enregistrements de données étiquetés comme appartenant à une catégorie d'un groupe confus particulier comme une entrée dans une autre carte auto-organisée correspondante pour la former.

FIG. 1

Construct SOM
map(i=1) — 210

Initialise map(i) — 212

Train map(i) with
selected input data — 214

Calculate switching
parameter(s) for each
record in data(i) — 216

Partition data(i) into
Ldata(i) for map(i) and
data(i>1) for map(i>1) — 218

Model based inference
on Ldata(i), assign
labels to activated units — 220

Assign labels to
inactivated nearest
neighbours — 222

228
Construct a
new map (i=i+1)

226
Perform feature
extraction to construct
input data for map(i+1)

224
No. of
records in data(i+1) >
thresholdA?

Learning stops — 230

FIG. 2

Sensor data ⌐310

312 ⌐ Enough signal duration for map(i)? — No

Yes

316 ⌐ Feature extraction for the selected map(i) → Wait for more data ⌐314

Find winning node in map(i) ⌐318

Calculate switching parameter(s) for map(i) ⌐320

326 ⌐ i=i+1 ← No — Switching parameters for map(i) < thresholdB? ⌐322

Yes

Output the current class label of map(i) ⌐324

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Thiemjarus et al.** *Proc. Int. Workshop on Wearable and Implantable Body Sensor Networks,* 2004, 1-2
- **Laerhoven ; Gellerson.** *Proceedings Eigth International Symposium On Wearable Computers IEEE Coput. Soc,* 2004, 142-149
- **Rauber A ; Merkl D ; Dittenbach M.** Growing Hierarchical Self-Organising Map (GH-SOM). *The growing hierarchical self-organising map: exploratory analysis of high-dimensional data. IEEE Transactions on Neural Networks,* 2002, vol. 13 (6), 1331-1341

- **Fritzke.** Growing grid: a self-organising network with constant neighbourhood range and adaptation strength. *Neural Processing Letters,* 1995, vol. 2 (5), 9-13
- **Laerhoven K.** Combining the self-organizing map and k-means clustering for on-line classification of sensor data. *Proceedings of the International Conference on Artificial Neural Networks,* 2001, 464-469
- **Godbole S ; Sarawagi S ; Chakrabarti S.** Scaling multi-class support vector machines using intere-class confusion. *Proceedings of the Eighth ACMSIGKDD International Converence on Knowledge Discover and Data Mining,* 2002, 513-518